# EUROPÄISCHE PATENTANMELDUNG

(11) **EP 1 073 178 A2**
(43) Veröffentlichungstag der Anmeldung: **31.01.2001**
(21) Anmeldenummer: 00110986.7
(22) Anmeldetag: 29.05.2000
(51) Int. Cl.: H02J 13/00

(54) **Adressierbare Schalteinrichtung für Installations-Bus-System**

(30) Priorität: 26.07.1999 DE 19934971
(71) Anmelder: PCS Process Control Systems GmbH Gesellschaft für Steuerungs- und Automationstechnik, 79115 Freiburg (DE)
(72) Erfinder: Pollak-Diener, Gerhard, Dr. Ing., 82110 Germering (DE)
(74) Vertreter: Reinhard - Skuhra - Weise & Partner

(57) **Zusammenfassung**

Installations-Bus-System mit mehreren Sensoren (1, 2), die an einen Installations-Bus (3) zur Übertragung von Informationsdaten angeschlossen sind, mehreren Aktoren (19), die jeweils über eine adressierbare Schalteinrichtung (14) an ein Versorgungsspannungsnetz (10, 11) angeschlossen sind, einer an dem Installations-Bus (3) angeschlossenen zentralen Steuereinrichtung (6), die abhängig von den auf dem Installations-Bus (3) übertragenen Informationsdaten Adreßdaten und Aktoren-Befehlsdaten mittels einer Einkoppeleinrichtung (9) auf die an dem Versorgungsspannungsnetz (10, 11) anliegende Versorgungsspannung aufmoduliert, wobei die durch die Adreßdaten adressierte Schalteinrichtung (14) die Versorgungsspannung an den zugehörigen Aktor (19) schaltet.

## Beschreibung

Die Erfindung betrifft eine adressierbare Schalteinrichtung für ein Installations-Bus-System für betriebstechnische Anlagen in Gebäuden o. dgl.

Betriebstechnische Anlagen in Gebäuden werden immer umfangreicher, wobei zum Schalten, Steuern, Regeln, Messen, Melden und Überwachen dieser betriebstechnischen Anlagen sogenannte Installations-Bus-Systeme angeboten werden. Die Informationsübertragung erfolgt bei derartigen Systemen über einen sogenannten Installations-Bus.

Die Hersteller von Bus-Systemen haben sich zu der EIBA (European Installation Bus Association) zusammengeschlossen und eine Bustechnik, den sogenannten Europäischen Installations-Bus EIB (European Installation Bus), erarbeitet.

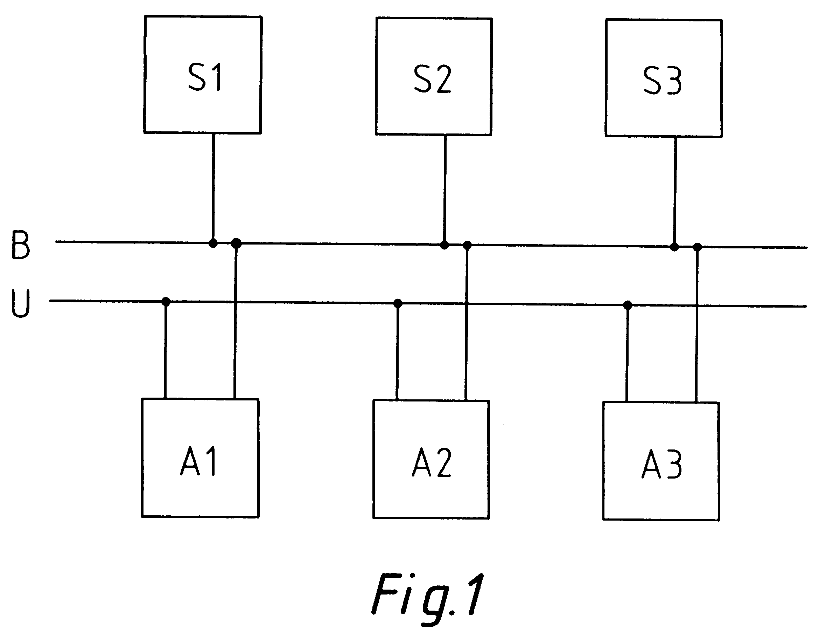

Fig. 1 zeigt ein Blockschaltbild eines Europäischen Installations-Busses nach dem Stand der Technik. An dem Europäischen Installations-Bus sind mehrere Sensoren S1, S2, S3 sowie mehrere Aktoren A1, A2, A3 angeschlossen. Über eine Versorgungsspannungsleitung U werden die Aktoren A1, A2, A3 mit Spannung versorgt.

Der in Fig. 1 gezeigte Installations-Bus stellt ein dezentrales, eigenes gesteuertes Bussystem mit serieller Datenübertragung zum Steuern, Überwachen und Melden betriebstechnischer Funktionen dar. Über den Installations-Bus B können alle angeschlossenen Busteilnehmer, d.h. die Sensoren und die Aktoren, Daten miteinander austauschen. Die Datenübertragung erfolgt seriell nach einem festgelegten Busprotokoll. Die Daten werden dabei über den Installations-Bus von einem Sensor S bzw. Befehlsgeber zu einem oder mehreren Aktoren A bzw. Befehlsempfängern gesendet.

Der Installations-Bus kann in Linien, Stern- oder Baumstruktur aufgebaut sein. Die Daten werden von den sendenden Busteilnehmern, beispielsweise Licht- oder Temperatursensoren, direkt an die Aktoren, beispielsweise Leuchtröhren oder Jalousie-Antriebe, über den Installations-Bus B übertragen.
Die Datenübertragung über den Installations-Bus B erfolgt asynchron. Der Zugriff auf den Bus B wird mit dem CSMA-CA-Verfahren geregelt, so daß ein kollisionsfreier Buszugriff garantiert ist, ohne den Busdatendurchsatz zu verringern.
Alle Busteilnehmer, d.h. sowohl die Sensoren S als auch die Aktoren A, können die auf dem Bus B anliegenden Daten abfragen, jedoch können nur die mit ihrer Adresse angesprochenen Aktoren A auf übertragene Befehlsdaten durch eine Handlung bzw. Aktion reagieren.
An der kleinsten Einheit des EIB-Bussystems können bis zu 64 Busteilnehmer angeschlossen und betrieben werden. Mit sogenannten Linienkopplern, die an eine Hauptlinie angeschlossen sind, können bis zu 12 Linien zu einem sogenannten Bereich verbunden werden. 15 derartige Bereiche können wiederum über Bereichskoppler an eine Bereichslinie angeschlossen werden. Jeder Busteilnehmer kann durch die Angabe einer Bereichs-, Linien- und Teilnehmernummer eindeutig identifiziert werden. Für die Zuordnung der Busteilnehmer zu den verschiedenen betriebstechnischen Funktionen, wie beispielsweise die Beleuchtungssteuerung, Jalousie-Steuerung, Leistungssteuerung, Lüftungssteuerung oder Klimasteuerung, werden die Busteilnehmer zu sogenannten Schaltgruppen zusammengefaßt. Wie man aus Fig. 1 erkennen kann, sind bei Einsatz von mehreren Aktoren, beispielsweise Leuchtstofflampen, innerhalb der gleichen Schaltgruppe die Leuchtröhren netzseitig an die Versorgungsspannungsleitung U und steuersignalseitig parallel zueinander an den Installations-Bus B geschaltet. Bei der Auswahl einer adressierbaren Schalteinrichtung bzw. eines Vorschaltgeräts eines der Aktoren A treten bei dem in Fig. 1 dargestellten Installations-Bus-System verschiedene Probleme auf. Aufgrund eines überhöhten Stromflusses kann der Installations-Bus B beschädigt werden. Da die Aktoren, beispielsweise Leuchtröhren, parallel geschaltet sind, kann der Ort des Kurzschlusses nur aufgefunden werden, wenn die Parallelschaltung aufgetrennt wird und jeder Aktor bzw. jede Leuchtröhre für sich getestet wird. Der wesentliche Nachteil des in Fig. 1 dargestellten Installations-Bus-Systems besteht darin, daß bei Veränderungen an den Raumwänden oder Schaltgruppen auch die Steuerleitungen zwischen dem Bus B und den Aktoren A erneut verlegt werden müssen.

Es ist daher die Aufgabe der vorliegenden Erfindung, eine Schalteinrichtung zu schaffen, bei dem zusätzlich zur Netzversorgungsleitung keine Busleitung erforderlich ist.

Diese Aufgabe wird erfindungsgemäß durch eine adressierbare Schalteinrichtung für ein Installations-Bus-System mit den im Patentanspruch 1 angegebenen Merkmalen sowie durch ein Installations-Bus-System mit den im Patentanspruch 14 angegebenen Merkmalen gelöst.

Vorteilhafte Ausgestaltungen der erfindungsgemäßen Schalteinrichtung und des erfindungsgemäßen Installations-Bus-Systems sind in den Unteransprüchen angegeben.

Erfindungsgemäß wird eine adressierbare Schalteinrichtung für ein Installations-Bus-System zum Schalten eines zugehörigen Aktors an ein Versorgungsspannungsnetz in Abhängigkeit von Adreßdaten geschaffen, die auf eine an dem Versorgungsspannungsnetz anliegende Versorgungsspannung aufmoduliert sind.

Ein Vorteil der erfindungsgemäßen Schalteinrichtung besteht darin, daß bei Veränderungen bzw. bei Baumaßnahmen an Raumwänden, in denen der Installations-Bus verlegt ist, eine Veränderung der Kabelinstallation zwischen dem Installations-Bus und den Aktoren A nicht mehr erforderlich ist.

Bei einer vorteilhaften Ausgestaltung der erfindungsgemäßen adressierbaren Schalteinrichtung steuert die Schalteinrichtung den zugehörigen Aktor in Abhängigkeit von Aktor-Befehlsdaten, die auf eine an dem Versorgungsspannungsnetz anliegende Versorgungsspannung aufmoduliert sind. Dies bietet den besonderen Vorteil, daß die Aktoren neben dem einfachen Ein- und Ausschalten auch bezüglich ihrer vorzunehmenden Aktion bzw. Handlung steuerbar sind. Handelt es sich bei den Aktoren um Leuchtstoffröhren, ist es möglich, durch Aktor-Befehlsdaten deren Leuchtstärke einzustellen bzw. die Leuchtstoffröhren zu dimmen, ohne daß eine zusätzliche Steuerleitung verlegt werden muß.

Bei einer weiteren vorteilhaften Ausgestaltung der erfindungsgemäßen Schalteinrichtung werden die Adreßdaten und die Aktor-Befehlsdaten der Versorgungsspannung als digitale Daten durch eine Steuereinrichtung in Abhängigkeit von Informationsdaten, die auf dem Installations-Bus übertragen werden, aufmoduliert. Dies bietet den besonderen Vorteil, daß die Aufmodulation der Daten einfach und störsicher realisiert wird.

Bei einer weiteren vorteilhaften Ausgestaltung der erfindungsgemäßen Schalteinrichtung besitzt diese eine Demodulationseinrichtung, insbesondere ein Power-Line-Modem, zur Demodulation der aufmodulierten Adreß- und Aktor-Befehlsdaten.

Bei einer weiteren vorteilhaften Ausgestaltung der erfindungsgemäßen Schalteinrichtung ist die Demodulationseinrichtung an eine Berechnungseinheit angeschlossen, welche die demodulierten Adreßdaten mit einstellbaren Adreßdaten der Schalteinrichtung vergleicht und bei Übereinstimmung der Adreßdaten den zugehörigen Aktor an das Versorgungsspannungsnetz schaltet.

Bei einer weiteren vorteilhaften Ausgestaltung der erfindungsgemäßen Schalteinrichtung sind die Adreßdaten durch digitale Schalter einstellbar. Dies bietet den besonderen Vorteil, daß die Adreßdaten eines Aktors in einfacher Weise am Installationsort des Aktors flexibel einstellbar sind und die eingestellten Adreßdaten aufgrund der sichtbaren Schalterstellungen direkt ablesbar sind.

Bei einer weiteren vorteilhaften Ausgestaltung der erfindungsgemäßen Schalteinrichtung weist diese ein Netzfilter auf, das die an dem Versorgungsspannungsnetz anliegende Versorgungsspannung gefiltert an ein Netzteil zur Spannungsversorgung der Demodulationseinrichtung und der Berechnungseinheit abgibt. Dies bietet den besonderen Vorteil, daß die erfindungsgemäße Schalteinrichtung ihre interne Versorgungsspannung aus der an dem Versorgungsspannungsnetz anliegenden Versorgungsspannung selbst erzeugt und keine zusätzliche Versorgungsspannungsleitung für die interne Spannungsversorgung der Schalteinrichtung verlegt werden muß.

Bei einer weiteren vorteilhaften Ausgestaltung der erfindungsgemäßen Schalteinrichtung gibt die Berechnungseinheit bei Übereinstimmung der Adreßdaten der Schalteinrichtung mit den demodulierten Adreßdaten die demodulierten Aktor-Befehlsdaten an eine Aktor-Steuereinrichtung ab, die den zugehörigen Aktor in Abhängigkeit von den Aktor-Befehlsdaten steuert.

Bei einer weiteren vorteilhaften Ausgestaltung der erfindungsgemäßen Schalteinrichtung werden die aufmodulierten Adreßdaten und Befehlsdaten als ein Datenwort auf mindestens einer der Netzleitungen des Versorgungsspannungsnetzes übertragen.

Bei einer weiteren vorteilhaften Ausgestaltung der erfindungsgemäßen Schalteinrichtung weist das Datenwort zusätzlich ein Startbit, ein Stopbit und ein Paritätsbit auf. Hierdurch wird erreicht, daß die Datenübertragung synchronisiert wird und Fehler bei der Datenübertragung erkennbar sind.

Bei einer weiteren vorteilhaften Ausgestaltung der erfindungsgemäßen Schalteinrichtung sind die zugehörigen Aktoren Leuchtstoffröhren.

Bei einer weiteren vorteilhaften Ausgestaltung der erfindungsgemäßen Schalteinrichtung werden durch die Aktor-Befehlsdaten verschiedene Dimm-Stufen der Leuchtstoffröhren eingestellt.

Bei einer weiteren vorteilhaften Ausgestaltung der erfindungsgemäßen Schalteinrichtung weist die Schalteinrichtung eingangsseitig eine Sicherung auf. Bei Ausfall eines Aktors aufgrund eines Kurzschlusses können hierbei die übrigen Aktoren weiter betrieben werden.

Die Erfindung schafft ferner ein Installations-Bus-System mit mehreren Sensoren, die an einen Installations-Bus zur Übertragung von Informationsdaten angeschlossen sind, mehreren Aktoren, die jeweils über eine adressierbare Schalteinrichtung an ein Versorgungsspannungsnetz angeschlossen sind, einer an dem Installations-Bus angeschlossenen zentralen Steuereinrichtung, die abhängig von den auf dem Installations-Bus übertragenen Informationsdaten Adreßdaten und Aktoren-Befehlsdaten mittels einer Einkoppeleinrichtung auf die an dem Versorgungsspannungsnetz anliegende Versorgungsspannung aufmoduliert, wobei die durch die Adreßdaten adressierte Schalteinrichtung die Versorgungsspannung an den zugehörigen Aktor schaltet.

Gemäß einer weiteren vorteilhaften Ausgestaltung des erfindungsgemäßen Installations-Bus-Systems koppelt die Einkoppeleinrichtung die Adreßdaten und die Befehlsdaten induktiv oder kapazitiv an mindestens eine Netzleitung des Versorgungsspannungsnetzes.

Bei einer weiteren vorteilhaften Ausgestaltung des erfindungsgemäßen Installations-Bus-Systems legt das Versorgungsspannungsnetz eine sinusförmige Versorgungswechselspannung mit einer Frequenz von 50 Hz und einer Amplitude von 230 V bzw. 400 V an die Schalteinrichtung an.

Im weiteren wird eine bevorzugte Ausführungsform der erfindungsgemäßen adressierbaren Schalteinrichtung für ein Installations-Bus-System unter Bezugnahme auf die beigefügten Zeichnungen zur Erläuterung erfindungswesentlicher Merkmale beschrieben.

Es zeigen:
- Fig. 1: ein Installations-Bus-System nach dem Stand der Technik;
- Fig. 2: ein Installations-Bus-System gemäß der Erfindung mit einer adressierbaren Schalteinrichtung;
- Fig. 3: eine adressierbare Schalteinrichtung gemäß der Erfindung im Detail.

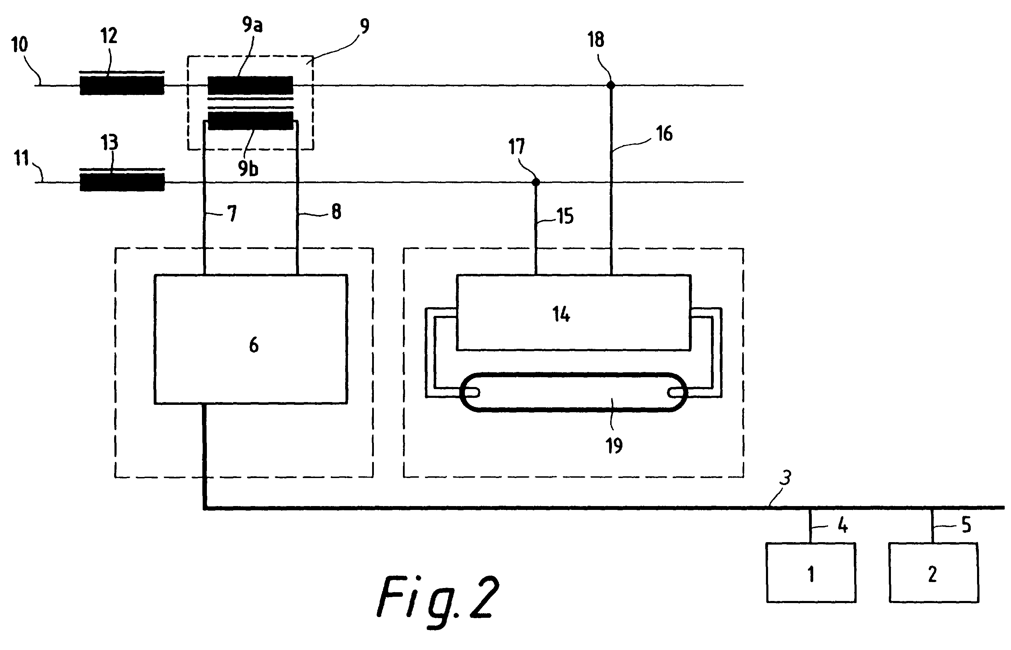

Das erfindungsgemäße Installations-Bus-System ist in Fig. 2 dargestellt.

Das Installations-Bus-System weist mehrere Sensoren 1, 2 auf, die über Anschlußleitungen 4, 5 an einen Installations-Bus 3 zur Übertragung von Informationsdaten angeschlossen sind. Der Installations-Bus 3 ist mit einer zentralen Steuereinrichtung 6 verbunden. Die zentrale Steuereinrichtung 6 ist über Leitungen 7, 8 mit einer Einkoppeleinrichtung 9 verbunden. Die Einkoppeleinrichtung 9 liegt in einer Phasenleitung 10 eines Versorgungsspannungsnetzes. Das Versorgungsspannungsnetz besteht in dem in Fig. 2 gezeigten Beispiel aus einer Phasenleitung 10 und einem Nulleiter 11. An den Phasenleiter 10 und den Nulleiter 11 sind Drosselspulen 12, 13 angeschlossen. Eine Schalteinrichtung 14 ist über Anschlußleitungen 15, 16 und über Anschlußknoten 17, 18 an den Nulleiter 11 und den Phasenleiter 10 angeschlossen. Über die Schalteinrichtung 14 ist die an dem Versorgungsspannungsnetz 10, 11 anliegende Versorgungsspannung an den zugehörigen Aktor 19 schaltbar.

Bei der in Fig. 2 gezeigten Ausführungsform ist der Aktor 19 eine Leuchtstoffröhre, insbesondere eine Neonröhre. Grundsätzlich können mehrere Schalteinrichtungen 14 mit zugehörigen Aktoren 19 an das Versorgungsspannungsnetz 10, 11 angeschlossen werden.

An der Phasenleitung 10 und dem Nulleiter 11 liegt beispielsweise eine sinusförmige Wechselspannung mit einer Frequenz von 50 Hz sowie eine Amplitude von 230 bzw. 400 V an.

Bei einer bevorzugten Ausführungsform des erfindungsgemäßen Installations-Bus-Systems sind die Sensoren 1, 2 Lichtsensoren zur Erfassung des Lichtes innerhalb eines Raumes. Erkennen die Sensoren 1, 2, daß das Licht in dem Raum nicht mehr ausreichend ist bzw. einen Schwellenwert unterschreitet, werden über den Installations-Bus 3 Informationsdaten zu der zentralen Steuereinrichtung 6 übertragen. Die zentrale Steuereinrichtung 6 erzeugt in Abhängigkeit von den empfangenen Informationsdaten Adreßdaten und Aktoren-Befehlsdaten. Zeigen die durch den Installations-Bus 3 empfangenen Informationsdaten an, daß in einem bestimmten Raum das Licht nicht mehr ausreichend ist, werden die zu den in diesem Raum befindlichen Aktoren bzw. Lampen gehörenden adressierbaren Schalteinrichtungen durch die zentrale Steuereinrichtung 6 durch Abgabe entsprechender Adreßdaten adressiert und Aktoren-Befehlsdaten, welche die gewünschte Leuchtstärke der Leuchtstoffröhren definieren, werden zusammen mit den Adreßdaten in ein Datenwort zusammengefaßt.

Das Datenwort besteht bei einer bevorzugten Ausführungsform aus einer Folge von binären Daten mit einer aus 8 Bits bestehenden Adresse und einem aus 6 Bits bestehenden Aktorenbefehl zur Einstellung der Dimm-Stufen der Leuchtstoffröhre. Zusätzlich weist das Datenwort ein Start- und ein Stopbit zur Synchronisation der Datenübertragung auf. Das Datenwort enthält ferner ein Paritätsbit zur Erkennung von Datenübertragungsfehlern. Das durch die zentrale Steuereinrichtung 6 gebildete Datenwort wird über die Anschlußleitung 7, 8 einer ersten Spule 9a der Einkoppeleinrichtung 9 zugeführt. Die binären Adreß- und Aktoren-Befehlsdaten des Datenwortes sowie die Synchronisations-und Paritätsbits werden von der ersten Spule 9a der Einkoppeleinrichtung induktiv auf die zweite Spule 9b der Einkoppeleinrichtung 9 und damit auf die an der Phasenleitung 10 anliegende Versorgungsspannung aufmoduliert.

Bei einer alternativen Ausführungsform erfolgt die Aufmodulation nicht, wie in dem in Fig. 2 gezeigten Beispiel, induktiv, sondern kapazitiv. Die digital aufmodulierten Adreßdaten und Aktoren-Befehlsdaten werden über die Phasenleitung 10, den Anschlußknoten 18 und die Anschlußleitung 16 zu der erfindungsgemäßen adressierbaren Schalteinrichtung 14 übertragen.

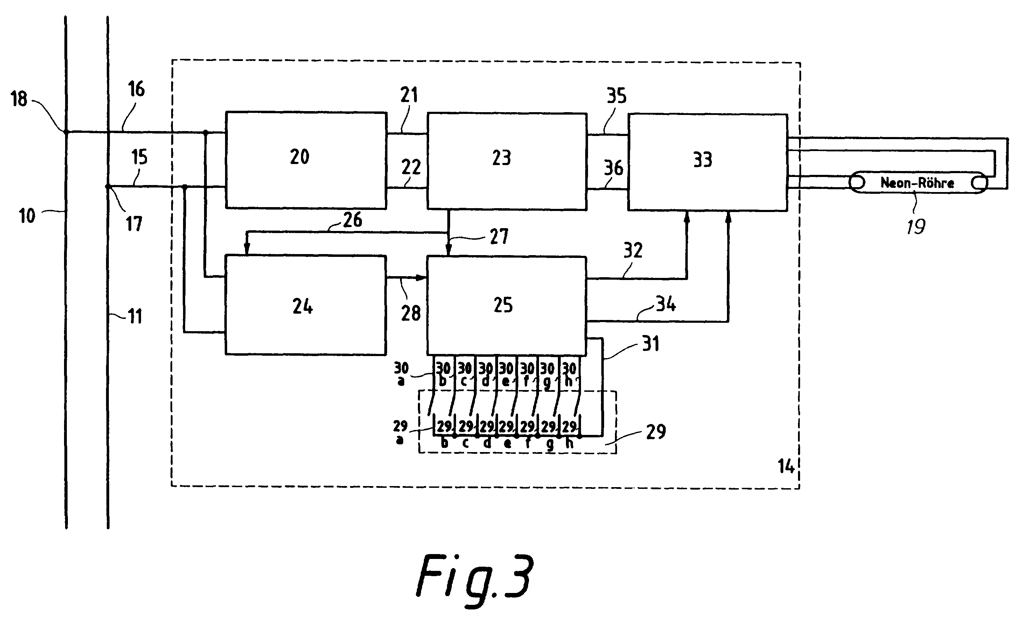

Fig. 3 zeigt die in Fig. 2 dargestellte erfindungsgemäße Schalteinrichtung 14 im Detail.

Die Schalteinrichtung 14 enthält ein Netzfilter 20 zur Filterung der über die Leitungen 15, 16 anliegenden Versorgungsspannung und ein mit dem Netzfilter 20 über Leitungen 21, 22 verbundenes Netzteil 23. Das Netzteil 23 dient der internen Spannungsversorgung einer Demodulationseinrichtung 24 und einer Berechnungseinheit 25 innerhalb der Schalteinrichtung 14. Die Demodulationseinrichtung 24 und die Berechnungseinheit 25 sind jeweils über eine interne Spannungsversorgungsleitung 26 bzw. 27 mit dem Netzteil 23 verbunden. Die Demodulationseinrichtung 24 besteht vorzugsweise aus einem sogenannten Power-Line-Modem, das die auf die Versorgungsspannung aufmodulierten digitalen Daten demoduliert und decodiert. Die decodierten Adreß- und Aktor-Befehlsdaten werden über eine Leitung 28 der Berechnungseinheit 25 zugeführt.

Die Adresse der erfindungsgemäßen Schalteinrichtung 14 ist über eine Adresseneinstelleinrichtung 29 einstellbar. Die Adresseneinstelleinrichtung 29 besteht vorzugsweise aus mehreren digitalen Schaltern 29a, 29b, 29c, 29d, 29e, 29f, 29g, 29h, die jeweils über Einstelleitungen 30a, 30b, 30c, 30d, 30e, 30f, 30g, 30h an die Berechnungseinheit 25 angeschlossen sind. Die internen Schalter der Adreßeinstelleinrichtung 29 sind über eine gemeinsame weitere Anschlußleitung 31 parallel an die Berechnungseinheit 25 geschaltet. Durch die Adresseneinstelleinrichtung 29 kann eine 8 Bits umfassende digitale Adresse am Installationsort der Schalteinrichtung manuell eingestellt werden, die in einem in der Berechnungseinheit 25 integrierten nicht-flüchtigen Speicher abgespeichert wird. Erkennt die Berechnungseinheit 25, daß die durch die Demodulationseinrichtung 24 demodulierten Adreßdaten mit der durch die Adresseneinstelleinrichtung eingestellten Adresse übereinstimmt, gibt die Berechnungseinheit 25 über eine erste Steuerleitung 32 einen Ein-/Ausschaltbefehl an eine Aktor-Steuereinrichtung 32 innerhalb der Schalteinrichtung 14 ab. Ferner gibt die Berechnungseinheit 25 bei Übereinstimmung der Adreßdaten die durch die Demodulationseinrichtung 24 demodulierten und decodierten Aktor-Befehlsdaten über eine zweite Steuerleitung 34 an die Aktor-Steuereinrichtung 33 ab.

Die Aktor-Steuereinrichtung 33 wird von dem internen Netzteil 23 über Versorgungsleitungen 35, 36 mit Spannung versorgt. Bei der Aktor-Steuereinrichtung 33 handelt es sich vorzugsweise um einen sogenannten Lampeninverter, der die Neonröhre 19 in Abhängigkeit von den über die Steuerleitungen 34 empfangenen Aktor-Befehlsdaten steuert. Die Aktor-Befehlsdaten, welche die Aktor-Steuereinrichtung 33 empfängt, geben vorzugsweise verschiedene Dimm-Stufen für die Neonröhre 19 an.

Bei einer alternativen Ausführungsform wird die Adresse nicht, wie bei der in Fig. 3 gezeigten Ausführungsform, hardwaremäßig über eine Adresseneinstelleinrichtung 29 eingegeben, sondern während eines Initialisierungsvorgangs durch besondere Aktor-Befehlsdaten zur Einstellung der Adresse.

Bei einer weiteren Ausführungsform kann die Adresse der erfindungsgemäßen Schalteinrichtung 14 sowohl softwaremäßig während eines Initialisierungsvorganges mittels eines besonderen Aktor-Befehls als auch hardwaremäßig durch eine Adresseneinstelleinrichtung 29 erfolgen.

Die in Fig. 3 dargestellte Schalteinrichtung ist ständig fest über die Anschlußleitungen 15, 16 an die Spannungsversorgungsnetzleitungen 10, 11 angeschlossen. Daher besteht keine Verkabelung der erfindungsgemäßen Schalteinrichtung 14 mit dem in Fig. 2 gezeigten Installations-Bus 3, wie dies beim Stand der Technik gemäß Fig. 1 der Fall ist. Bei einer Veränderung von Raumwänden, in denen der Installations-Bus 3 verlegt ist, muß also bei der erfindungsgemäßen Schalteinrichtung keine Veränderung der Kabelinstallation vorgenommen werden. Dies stellt eine erhebliche Arbeitserleichterung dar.

Die in Fig. 3 gezeigte erfindungsgemäße Schalteinrichtung 14 enthält eingangsseitig eine Sicherung. Im Falle eines Kurzschlusses in der Schalteinrichtung 14 fällt die in der Schalteinrichtung eingebaute eingangsseitige Sicherung aus, und die entsprechende Leuchtstoffröhre 19 leuchtet nicht mehr. Die Sicherung kann vorzugsweise als Schmelzsicherung oder als LS-Schalter ausgebildet sein. Wenn aufgrund des Kurzschlusses die in der Schalteinrichtung enthaltene Elektronik durch Überströme beschädigt wird, ist nur die zu der Schalteinrichtung gehörende Leuchstoffröhre 19 betroffen, während alle übrigen Leuchtstoffröhren der Schaltgruppe weiterbrennen. Für den Fall, daß gleichzeitig mit der in der Schalteinrichtung 14 eingebauten Sicherung auch die Sicherung der gesamten Stromschiene abschaltet bzw. ausfällt, kann die Sicherung der Stromschiene ohne Gefahr wieder zugeschaltet werden. Die ausgefallene Leuchtstoffröhre läßt sich so auf einfache Weise identifizieren.

Bei dem erfindungsgemäßen Installations-Bus-System kann die Zuordnung einzelner Aktoren bzw. Leuchtstoffröhren 19 zu den Schaltgruppen einfach geändert werden, indem man in die zentrale Steuereinrichtung 6 die Adresse der neu zugeordneten Schalteinrichtungen eingibt oder den Schalteinrichtungen neue Schaltgruppen zuweist. Zu diesem Zweck ist die in Fig. 2 dargestellte zentrale Steuereinrichtung 6 über eine nicht dargestellte Eingabeleitung an eine Eingabeeinrichtung angeschlossen.

## Patentansprüche

1. Adressierbare Schalteinrichtung für ein Installations-Bus-System zum Schalten eines zugehörigen Aktors (19) an ein Versorgungsspannungsnetz (10, 11) in Abhängigkeit von Adreßdaten, die auf einer an dem Versorgungsspannungsnetz anliegenden Versorgungsspannung aufmoduliert sind.

2. Adressierbare Schalteinrichtung nach Anspruch 1,
**dadurch gekennzeichnet**,
daß der zugehörige Aktor (19) in Abhängigkeit von Aktor-Befehlsdaten, die auf eine an dem Versorgungsspannungsnetz (10, 11) anliegenden Versorgungsspannung aufmoduliert sind, steuerbar ist.

3. Adressierbare Schalteinrichtung nach Anspruch 1 oder 2,
**dadurch gekennzeichnet**,
daß die Adreßdaten und die Aktor-Befehlsdaten der Versorgungsspannung als digitale Daten durch eine Steuereinrichtung (6) in Abhängigkeit von Informationsdaten aufmodulierbar sind, wobei die Informationsdaten auf einem Installations-Bus (3) übertragen werden.

4. Adressierbare Schalteinrichtung nach einem der Ansprüche 1 bis 3,
**dadurch gekennzeichnet**,
daß die Schalteinrichtung (14) eine Demodulationseinrichtung (24) zur Demodulation der aufmodulierten Adreß- und Aktoren-Befehlsdaten aufweist.

5. Adressierbare Schalteinrichtung nach Anspruch 4,
**dadurch gekennzeichnet**,
daß die Demodulationseinrichtung (24) an eine Berechnungseinheit (25) angeschlossen ist, welche die demodulierten Adreßdaten mit einstellbaren Adreßdaten der Schalteinrichtung vergleicht und bei Übereinstimmung der Adreßdaten den zugehörigen Aktor (19) an das Versorgungsspannungsnetz (10, 11) schaltet.

6. Adressierbare Schalteinrichtung nach einem der Ansprüche 1 bis 6,
**dadurch gekennzeichnet**,
daß die Adreßdaten durch digitale Schalter (29) einstellbar sind.

7. Adressierbare Schalteinrichtung nach einem der Ansprüche 1 bis 6,
**gekennzeichnet durch** ein Netzfilter (20), das die an dem Versorgungsspannungsnetz (10, 11) anliegende Versorgungsspannung gefiltert an ein Netzteil (23) zur Spannungsversorgung der Demodulationseinrichtung (24) und der Berechnungseinheit (25) abgibt.

8. Adressierbare Schalteinrichtung nach einem der vorangehenden Ansprüche 5 bis 7,
**dadurch gekennzeichnet**,
daß bei Übereinstimmung der Adreßdaten der Schalteinrichtung (14) mit den demodulierten Adreßdaten die demodulierten Aktor-Befehlsdaten an eine Aktor-Steuereinrichtung abgibt, welche den zugehörigen Aktor in Abhängigkeit von den Aktor-Befehlsdaten steuert.

9. Adressierbare Schalteinrichtung nach einem der vorangehenden Ansprüche 1 bis 8,
**dadurch gekennzeichnet**,
daß die aufmodulierten Adreßdaten und die aufmodulierten Befehlsdaten als Datenwort auf mindestens einer Netzleitung (10) des Versorgungsspannungsnetzes (10, 11) übertragen werden.

10. Adressierbare Schalteinrichtung nach Anspruch 9,
**dadurch gekennzeichnet**,
daß das Datenwort zusätzlich ein Startbit und ein Stopbit zur Synchronisation sowie ein Paritätsbit aufweist.

11. Adressierbare Schalteinrichtung nach einem der vorangehenden Ansprüche,
**dadurch gekennzeichnet**,
daß die Schalteinrichtung (14) eine Leuchtstoffröhre (19) in Abhängigkeit von den Adreßdaten an das Versorgungsspannungsnetz schaltet.

12. Adressierbare Schalteinrichtung nach Anspruch 11,
**dadurch gekennzeichnet**,
daß die Aktor-Befehlsdaten verschiedene Dimm-Stufen der Leuchtstoffröhre (19) einstellen.

13. Adressierbare Schalteinrichtung nach einem der vorangehenden Ansprüche 1 bis 12,
**dadurch gekennzeichnet**,
daß die Schalteinrichtung (14) eingangsseitig eine Sicherung aufweist.

14. Installations-Bus-System mit
mehreren Sensoren (1, 2), die an einen Installations-Bus (3) zur Übertragung von Informationsdaten angeschlossen sind,
mehreren Aktoren (19), die jeweils über eine adressierbare Schalteinrichtung (14) an ein Versorgungsspannungsnetz (10, 11) angeschlossen sind,
einer an den Installations-Bus (3) angeschlossenen zentralen Steuereinrichtung (6), die abhängig von den auf dem Installations-Bus (3) übertragenen Informationsdaten Adreßdaten und Aktoren-Befehlsdaten mittels einer Einkoppeleinrichtung (9) auf die an dem Versorgungsspannungsnetz (10, 11) anliegende Versorgungsspannung aufmoduliert,
wobei die durch die Adreßdaten adressierte Schalteinrichtung (14) die Versorgungsspannung an den zugehörigen Aktor (19) schaltet.

15. Installations-Bus-System nach Anspruch 14,
**dadurch gekennzeichnet**,
daß die Einkoppeleinrichtung (9) die Adreßdaten und die Befehlsdaten induktiv oder kapazitiv auf mindestens eine Netzleitung (10) des Versorgungsspannungsnetzes (10, 11) einkoppelt.

16. Installations-Bus-System nach Anspruch 14 oder 15,
**dadurch gekennzeichnet**,
daß das Versorgungsspannungsnetz (10, 11) eine sinusförmige Versorgungswechselspannung mit einer Frequenz von 50 Hertz und einer Amplitude von 230 Volt oder 400 Volt an die Schalteinrichtungen (14) anlegt.
